# DEMANDE DE BREVET EUROPEEN

(11) **EP 4 376 292 A1**
(43) Date de publication de la demande: **29.05.2024**
(21) Numéro de dépôt: 23383189.0
(22) Date de dépôt: 22.11.2023
(51) Int. Cl.: H02S 20/20, E04F 10/08, F24S 20/67, F24S 25/12, F24S 25/35, H02S 20/23

(54) **PERGOLA POURVUE DE SUPPORT DE PLAQUES SOLAIRES**

(30) Priorité: 23.11.2022 ES 202231953 U
(71) Demandeur: Producciones Mitjavila, S.A.U., 17730 Girona (ES)
(72) Inventeur: DENNINGER, Morgan, 17730 Girona (ES); MITJAVILA, Raymond, 17730 Girona (ES)
(74) Mandataire: Balder IP Law, S.L.

(57) **Abrégé**

Structure (S) pour pergola (P), qui comprend au moins deux profilés longitudinaux (L1, L2) dont la section transversale (CS) est dans le plan défini par les directions transversale (Y) et en hauteur (Z), la section transversale (CS) des profilés longitudinaux (L1, L2) étant constituée d'une section centrale (S1), une section inférieure (S2), une section supérieure (S3), puis dans laquelle la section supérieure (S3) comprend une rainure longitudinale (R3) dont l'ouverture (A3) est orientée selon la direction en hauteur (Z), la rainure longitudinale (R3) étant pourvue de bords de retenue (B3). L'invention se rapporte également à un procédé de montage de cette pergola.

## Description

### DOMAINE TECHNIQUE

La présente invention concerne des pergolas pourvues de plaques solaires et leur procédé d'installation.

### ANTÉCÉDENTS

On connaît des pergolas pourvues d'une structure de support, qui comprennent des panneaux pourvus à leur tour d'un cadre et d'une plaque photovoltaïque.

Un exemple de ces structures est décrit dans ES 1 074714 U qui décrit une structure de toiture avec un panneau solaire, dans lequel la fixation des panneaux est réalisée par la coopération de profilés supérieurs et inférieurs qui emprisonnent les panneaux entre eux.

Bien qu'il s'agisse d'une structure satisfaisante, elle présente l'inconvénient de nécessiter deux profilés qui collaborent entre eux pour chaque panneau, ce qui rend sa facilité de montage non optimale.

### DESCRIPTION DE L'INVENTION

Pour surmonter les inconvénients de l'état de l'art, la présente invention propose une structure pour pergola, comprenant au moins deux profilés longitudinaux dans lesquels une direction longitudinale, une direction transversale et une direction en hauteur perpendiculaires à la direction longitudinale et à la direction transversale sont définies de sorte que la section transversale des profilés longitudinaux est dans le plan défini par les directions transversale et en hauteur, la section transversale des profilés longitudinaux étant constituée de :
- une section centrale ;
- une section inférieure ;
- une section supérieure ;
dans laquelle la section supérieure comprend une rainure longitudinale dont l'ouverture est orientée selon la direction en hauteur, la rainure longitudinale étant pourvue de bords de retenue.

Avec ces caractéristiques, des panneaux solaires peuvent être installés très facilement sur la structure, puisqu'il s'agit d'une rainure disposée sur la partie supérieure, il est possible d'effectuer un procédé de montage telle qu'il sera décrit ci-dessous.

En outre, il est possible de monter les panneaux sur la structure, à savoir, au-dessus de la surface supérieure de la structure, de sorte que les panneaux peuvent être montés les uns à côté des autres, à savoir, sans aucune interposition d'éléments entre les profilés. De cette façon, la densité de profilé de captation solaire est augmentée par rapport aux solutions utilisant des profilés qui séparent les panneaux les uns des autres.

Un autre avantage de la structure est qu'elle permet d'utiliser le propre cadre des panneaux pour réaliser la fixation, tel qu'on le verra plus tard.

Dans certains modes de réalisation, un canal intérieur est défini dans la rainure longitudinale, la largeur de l'ouverture selon la direction transversale étant inférieure à une largeur du canal intérieur selon la direction transversale, de sorte que les bords de retenue sont définis.

Dans certains modes de réalisation, au-dessus de l'ouverture, les bords de retenue sont inclinés, de sorte qu'ils permettent de guider l'insertion d'une plaque de retenue. Tel qu'on le verra ci-dessous, c'est avantageux, car cela facilite grandement le travail des installateurs.

Dans certains modes de réalisation, la section inférieure comprend une extension latérale inférieure selon la direction transversale qui définit une concavité orientée selon la direction en hauteur, de sorte qu'elle constitue un canal de collecte des eaux. De cette façon, dans le cas où la fixation entre les panneaux et la section supérieure du profilé n'est pas étanche, l'eau sera collectée.

Dans certains modes de réalisation, la section centrale définit un premier côté et un second côté opposé au premier côté selon la direction transversale et la rainure est disposée dans une extension latérale supérieure disposée du même côté que l'extension latérale inférieure.

Dans certains modes de réalisation, la section supérieure des profilés longitudinaux comprend deux rainures longitudinales dont les ouvertures sont orientées selon la direction en hauteur, les rainures longitudinales étant pourvues de bords de retenue, la section inférieure étant pourvue d'un canal de collecte des eaux des deux côtés, et de préférence la section centrale comprend un canal central disposé entre les rainures.

Cette variante de profilé peut être utilisée dans des structures qui comprennent deux ou plusieurs rangées de panneaux, puisqu'elles font office de liens entre profilés adjacents selon la direction transversale. Par profilés adjacents selon la direction transversale il faut comprendre que la rangée va selon la direction Y, et que les panneaux adjacents selon cette direction sont en contact les uns avec les autres sur leurs faces qui sont disposées longitudinalement, à savoir, selon la direction X. Le contact de ces faces peut ne pas être total, de sorte que des rainures ou des espaces peuvent subsister entre les panneaux, ce qui peut permettre une infiltration d'eau. C'est pour cette raison qu'entre et sous les deux rainures de fixation/retenue, le profilé peut capter ces infiltrations grâce au canal, cela amènera l'eau à la partie avant de la structure où elle sera convenablement canalisée.

Dans certains modes de réalisation, la ou les extensions latérales inférieures comprennent à leur extrémité une rainure d'insertion de plaques de fixation. Ces plaques de fixation, qui pourront être disposées dans n'importe quelle position le long du profilé, permettre l'agencement d'autres éléments de fixation, tel qu'on le verra plus tard.

Dans certains modes de réalisation, la structure comprend des profilés transversaux intermédiaires à section en U destinés à constituer des caniveaux de collecte d'eau. Le canal central d'une variante de profilé longitudinal qui permet de collecter l'eau qui s'infiltre entre des panneaux adjacents dans la direction transversale Y a été décrit précédemment. La mission de ces profilés transversaux est analogue, mais il s'agit de collecter l'eau entre des profilés adjacents selon la direction X.

L'invention concerne également une pergola pourvue d'une structure selon l'une quelconque des variantes décrites ci-dessus, qui comprend au moins un panneau pourvu d'un cadre et d'une plaque photovoltaïque, la section du cadre étant pourvue d'une section centrale qui constitue un encerclement de cadre, une section supérieure de fixation de la plaque photovoltaïque et d'une section inférieure qui prolonge perpendiculairement la section centrale pour constituer un espace entre la plaque photovoltaïque et le cadre, et des vis de fixation pourvues d'une tête d'entraînement, d'une tige et d'une plaque de retenue destinée à être insérée dans les rainures.

Dans certains modes de réalisation, les plaques de retenue ont une dimension plus petite ou égale à la largeur des rainures et une dimension plus grande dans la direction perpendiculaire à la plus petite dimension.

Dans certains modes de réalisation, la pergola comprend au moins deux panneaux disposés contigus dans la direction transversale, l'un des panneaux étant fixé au profilé longitudinal par le biais d'une des rainures longitudinales, l'autre panneau étant fixé au profilé longitudinal par le biais de l'autre rainure, de sorte que le canal central est disposé sous la zone où se trouvent les panneaux.

Dans certains modes de réalisation, la pergola comprend au moins deux panneaux disposés contigus dans la direction longitudinale, au moins un profilé transversal intermédiaire à section en U étant disposé de sorte que le canal qu'il définit est disposé sous la zone où se trouvent les panneaux.

Dans certains modes de réalisation, la pergola comprend un profilé avant et un profilé arrière perpendiculaire aux profilés longitudinaux.

Dans certains modes de réalisation, la pergola comprend au moins un caisson de 'jonctions des panneaux, et des profilés transversaux de fixation et/ou logement du ou des caissons de 'jonctions.

Finalement, l'invention concerne un procédé de montage d'une pergola selon l'une quelconque des variantes inventives décrites ci-dessus, qui comprend les étapes de :
- Monter la structure ;
- Préparer les panneaux avec leurs vis respectives ;
- Les disposer au-dessus des profilés longitudinaux de sorte que les plaques de retenue soient alignées verticalement avec les rainures longitudinales ;
- Abaisser les panneaux de sorte que les plaques de retenue soient insérées dans les canaux en dessous des bords de retenue ;
- Faire tourner les plaques de retenue par le biais des têtes d'entraînement des vis de sorte que les extrémités des plaques de retenue soient en dessous des bords de retenue et que les panneaux soient fixés à la structure.

Les différents aspects et modes de réalisation de l'invention définis ci-dessus peuvent être combinés entre eux, à condition qu'ils soient mutuellement compatibles.

Des avantages et caractéristiques supplémentaires de l'invention apparaîtront clairement à partir de la description détaillée suivante et seront particulièrement stipulés dans les revendications jointes.

### BRÈVE DESCRIPTION DES DESSINS

Pour compléter la description et dans l'objectif de faciliter une meilleure compréhension des caractéristiques de l'invention, selon des exemples de réalisation pratique de l'invention, un jeu de figures est accompagné, comme partie intégrante de la description, dans lesquelles, à caractère illustratif et non limitatif, il a été représenté ce qui suit :
Les figures 1 et 2a montrent respectivement une section et une perspective coupée où sont représentées deux parties de la structure selon l'invention.
La figure 2b montre la partie gauche de la figure 2a agrandie.
La figure 2c montre la partie droite de la figure 2a agrandie.

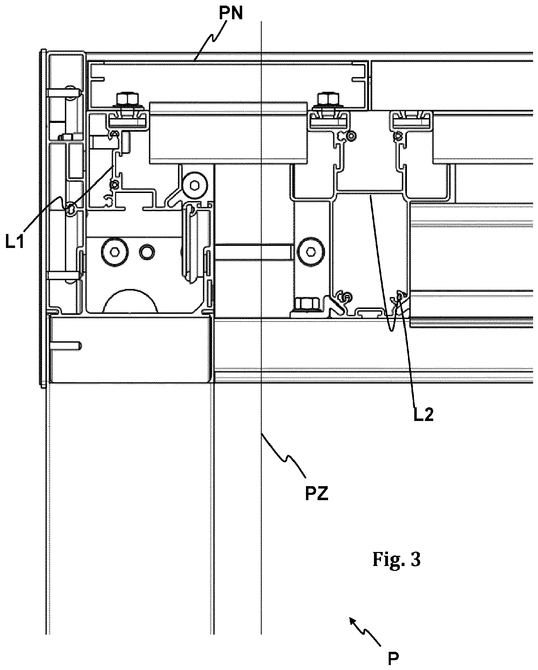

La figure 3 montre une section plus complète de la pergola selon l'invention. Pour pouvoir représenter plusieurs profils sur la figure, la portion indiquée par PZ a été considérablement raccourcie.
La figure 4 montre une vue en élévation d'une zone intermédiaire de la pergola et le détail des profilés transversaux de collecte des eaux et de support et/ou logement de l'unité de 'jonctions des panneaux photovoltaïques.
La figure 5 montre les détails des profilés antérieur et arrière, dans un mode de réalisation dans lequel le profilé arrière comprend des crochets pour la fixation sur des plaques de montage.

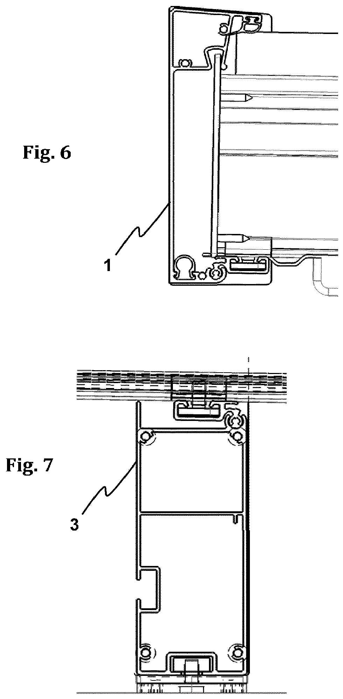

La figure 6 montre un autre mode de réalisation pour la partie arrière de la pergola.
La figure 7 montre en détail un mode de réalisation du profilé antérieur.

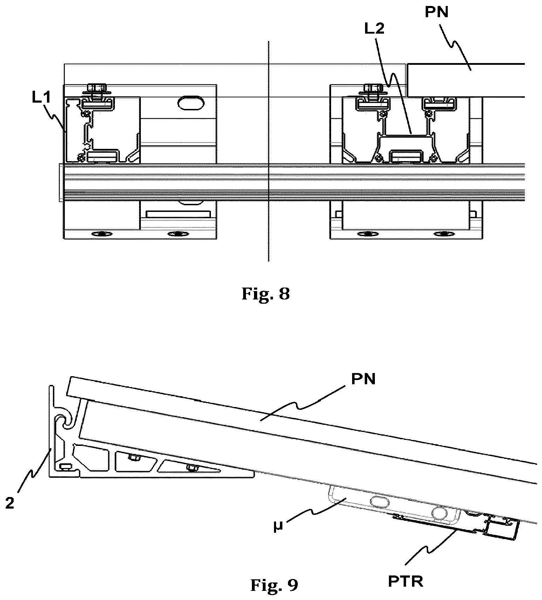

La figure 8 montre le détail de fixation des panneaux, par le biais d'écrous quart de tour à tête rectangulaire.
La figure 9 montre un autre mode de réalisation de la partie arrière de la structure.

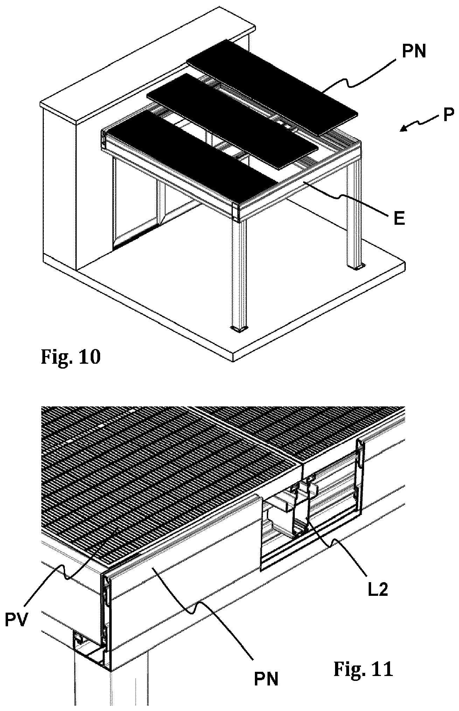

La figure 10 montre un mode de réalisation pratique de la pergola dans lequel le profilé arrière est fixé à une clôture d'une habitation.
La figure 11 montre le détail de la finition précédente de la structure, avec une partie retirée pour apprécier l'agencement des panneaux par rapport à un profilé de ceux qui sont disposés dans la zone intermédiaire, selon la direction transversale, de la pergola.
La figure 12 montre la structure selon l'invention sans les panneaux.
La figure 13 montre des détails de la structure selon l'invention.

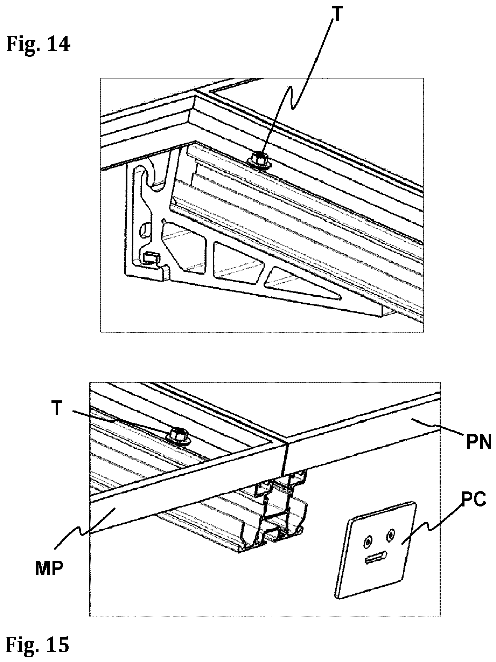

Les figures 14 et 15 montrent le détail de fixation avec une vis de type quart de tour.
Les figures 16 à 21 montrent diverses formes de profilés longitudinaux pour structures selon l'invention.
La figure 22 montre le cadre du panneau avec les quatre trous et les vis quart de tour correspondantes.
La figure 23 illustre la simplicité du procédé de liaison des panneaux à la structure.

### DESCRIPTION D'UN MODE DE RÉALISATION PRÉFÉRÉ DE L'INVENTION

Dans la description des modes de réalisation préférés possibles de l'invention, de nombreux détails doivent être donnés pour favoriser une meilleure compréhension de l'invention. Néanmoins, il apparaîtra clairement à l'homme du métier, que l'invention peut être mise en oeuvre sans ces détails spécifiques. D'autre part, les caractéristiques bien connues n'ont pas été décrites en détail pour éviter de compliquer inutilement la description.

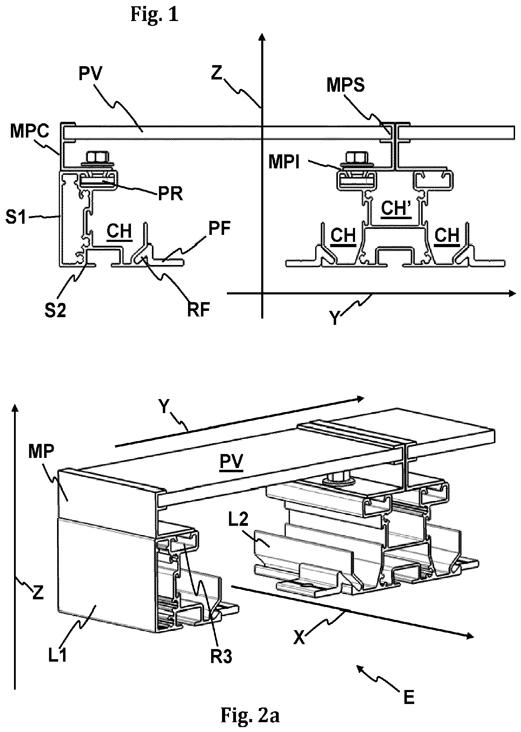

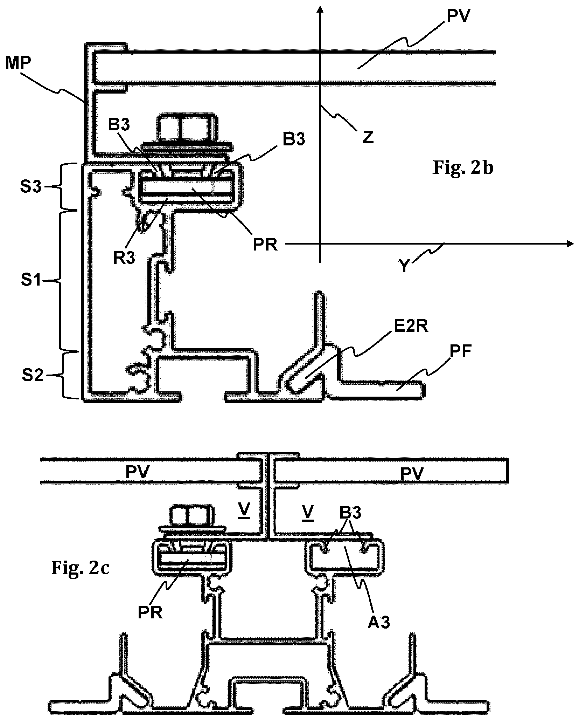

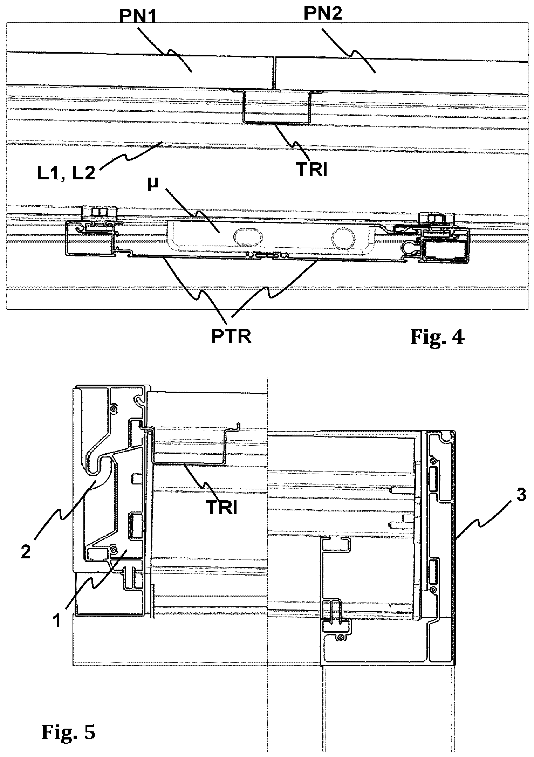

Tel qu'il est illustré par exemple sur la figure 1 et 2, l'invention concerne une structure S pour pergola P. Cette structure comprend au moins deux profilés longitudinaux L1, L2, et des profilés arrière 1 et antérieur 3, par exemple comme ceux illustrés sur la figure 5. Ces profilés forment le cadre principal de la structure S de la pergola.

Les profilés longitudinaux L1, L2 définit une direction longitudinale X, une direction transversale Y et une direction en hauteur Z perpendiculaire à la direction longitudinale X et à la direction transversale Y. Ces directions aideront à décrire plus clairement les détails de l'invention.

Ainsi, la section transversale CS des profilés longitudinaux L1, L2 est dans le plan défini par les directions transversale Y et en hauteur Z.

Comme on peut le voir par exemple sur la figure 2b, la section transversale CS des profilés L1, L2 longitudinale constituée de :
- une section centrale S1 ;
- une section inférieure S2 ;
- une section supérieure S3.

Et selon l'invention, la section supérieur S3 comprend une rainure longitudinale R3 dont l'ouverture A3 est orientée selon la direction en hauteur Z, la rainure longitudinale R3 étant pourvue de bords de retenue B3. Par ouverture orientée selon la direction Z, on entend que la direction d'insertion dans l'ouverture se fait selon la direction Z.

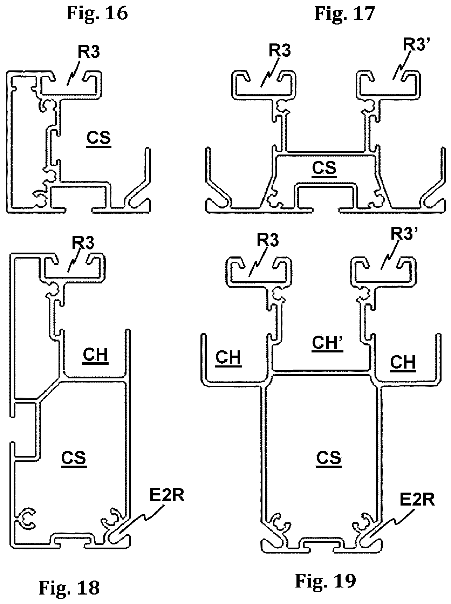

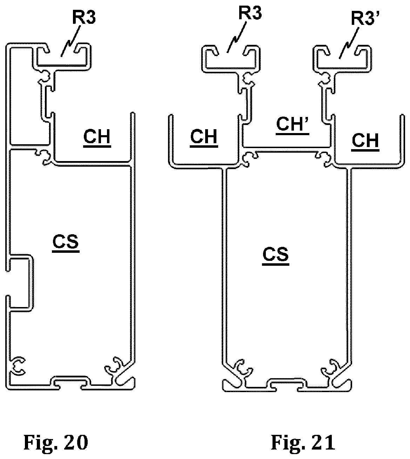

Divers modes de réalisation des profilés de la structure selon l'invention sont montrés sur les figures 16 à 21, adaptés aux différentes dimensions de pergolas P.

Tel qu'on peut le voir sur les figures, sur la rainure longitudinale R3 est défini un canal intérieur C3, la largeur de l'ouverture A3 selon la direction transversale Y étant inférieure à une largeur du canal intérieur C3 selon la direction transversale Y, de sorte que les bords de retenue B3 sont définis. Dans les modes de réalisation illustrés les bords de retenue B3 sont inclinés, de sorte qu'ils permettent de guider facilement l'insertion d'une plaque de retenue PR.

La section inférieure S2 comprend une extension latérale inférieure E2 selon la direction transversale Y qui définit une concavité CH orientée selon la direction en hauteur Z, de sorte qu'elle constitue un canal CH de collecte des eaux.

La section centrale S1 définit un premier côté LD et un second côté LR opposé au premier côté LD selon la direction transversale Y et la rainure R3 est disposée dans une extension latérale supérieure E3 disposée du même côté LD, LR que l'extension latérale inférieure E2.

En général la pergola sera plus large que la dimension d'un panneau PN, elle sera donc recouverte de plusieurs rangées et colonnes de panneaux PN, PN'. Pour cette raison, il est prévu que les profilés intermédiaires L2 aient une structure un peu plus complexe que les profilés des extrémités latérales L1.

Dans ces profilés longitudinaux L2 la section supérieure S3 comprend deux rainures longitudinales R3, R3' dont les ouvertures A3, A3' sont orientées selon la direction en hauteur Z, les rainures R3, R3' longitudinales R3, R3' étant pourvues de bords de retenue, la section inférieure S2 étant pourvue d'un canal de collecte des eaux CH des deux côtés LD, LR, et de préférence la section centrale S1 comprend un canal central CH' disposé entre les rainures R3, R3'. 11. De cette façon, deux panneaux PN, PN' disposés contigus selon la direction transversale Y peuvent être fixés, l'un des panneaux PN étant fixé au profilé longitudinal L2 par le biais d'une des rainures longitudinales R3, l'autre panneau PN' étant fixé au profilé longitudinal L2 par le biais de l'autre rainure R3', de sorte que le canal central CH' est disposé sous la zone où se trouvent les PN, PN'.

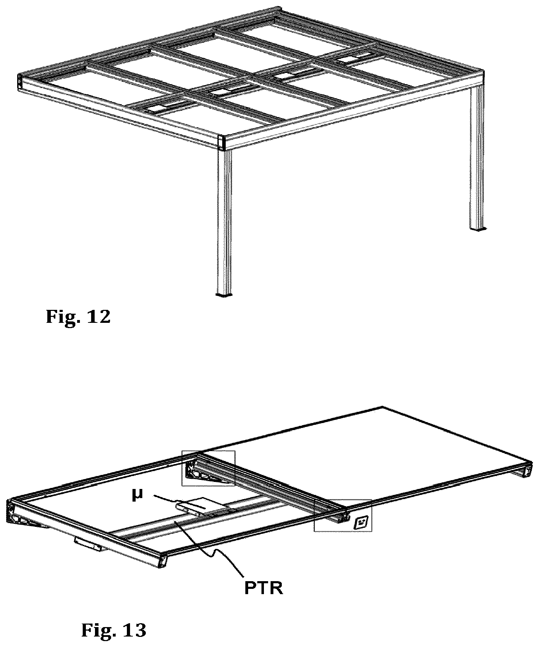

Il est prévu tel qu'on peut le voir sur la figure 2b, que l'extension latérale du profilé latéral L1 à l'extrémité de son extension latérale inférieure E2 une rainure d'insertion E2R de plaques de fixation PF. Ces plaques de fixation peuvent être utilisées par exemple pour fixer des profilés transversaux PTR de logement des caissons de jonctions µ des panneaux PN, PN', PN1, PN2, tel que le montre la figure 4 ou la figure 13.

Un autre composant de la structure sont les profilés transversaux intermédiaires TRI à section en U destinés à constituer des canaux de collecte d'eau, tel que le montre la figure 4. 12. Ainsi, tel que le montre la figure 4, deux panneaux PN1, PN2 disposés contigus selon la direction longitudinale X peuvent être fixés, au moins un profilé transversal intermédiaire TRI à section en U étant disposé de sorte que le canal qu'il définit est disposé sous la zone où se trouvent les panneaux PN1, PN2.

La structure S décrite jusqu'à présent fait partie d'une pergola P qui est également pourvue de panneaux PN photovoltaïques.

En particulier la structure S de l'invention est conçue pour supporter des panneaux PN pourvus d'un cadre CP et d'une plaque photovoltaïque PV, la section du cadre CP étant pourvue d'une section centrale CPC qui constitue un encerclement de CP cadre, une section supérieure de fixation de la plaque photovoltaïque PV et d'une section inférieure CPI qui prolonge perpendiculairement la section centrale CPC pour constituer un espace V entre la plaque photovoltaïque PV et le cadre CP.

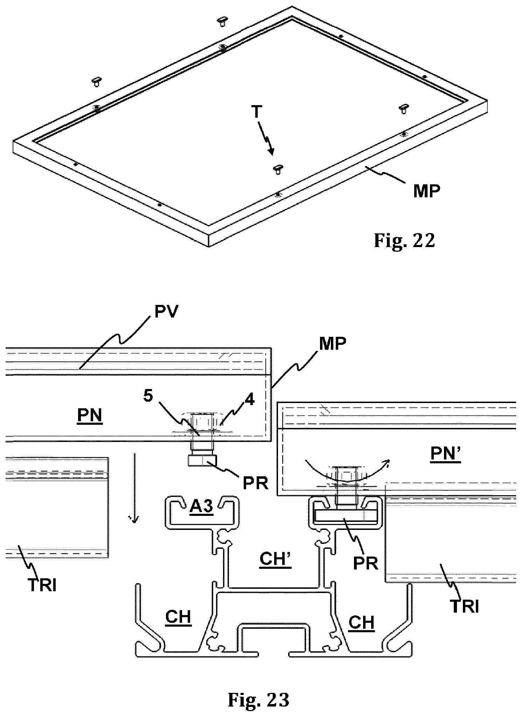

De cette façon, l'installateur dispose d'un espace pour fixer les vis de fixation T. En particulier les vis quart de tour, qui sont pourvues, tel que le montre la figure 23, d'une tête d'entraînement 4, d'une tige 5 et d'une plaque de retenue PR destinée à être insérée dans les rainures R3, R3'. Ces plaques de retenue PR ont une dimension inférieure ou égale à la largeur des rainures R3, R3' et une dimension plus grande.

L'importance de l'invention devient évidente lorsque l'on réalise le procédé de pose et de fixation des panneaux PN, PN' à la structure S.

Le procédé tel qu'illustré sur la figure 23 consiste à :
- Monter d'abord la structure S ;
- Préparer les panneaux PN, PN', PN1, PN2 avec leurs vis T quart de tour respectives ;
- Disposer les PN, PN', PN1, PN2 au-dessus des profilés longitudinaux L1, L2 de sorte que les plaques de retenue PR sont alignées verticalement avec les rainures longitudinales R3, R3' ;
- Abaisser les panneaux PN, PN', PN1, PN2 de sorte que les plaques de retenue PR soient insérées dans les canaux en dessous des bords de retenue B3 ;
- Faire tourner les plaques de retenue PR par le biais des têtes d'entraînement 4 des vis T de sorte que les extrémités des plaques de retenue PR soient en dessous des bords de retenue B3 et que les panneaux soient fixés à la structure S.

Au vu de cette description et de ces figures, l'homme du métier comprendra que l'invention a été décrite selon certains modes de réalisation préférés de celle-ci, mais que de multiples variantes peuvent être introduites dans lesdits modes de réalisation préférés, sans s'éloigner de l'objet de l'invention tel qu'il a été revendiqué.

Dans ce texte, le terme « comprend » et ses dérivations (telles que « comprenant », etc.) ne doivent pas être compris dans un sens exclusif. À savoir, ces termes ne doivent pas être interprétés comme excluant la possibilité que ce qui est décrit et défini puisse inclure davantage d'éléments, d'étapes, etc.

## Revendications

1. Structure (S) pour pergola (P), qui comprend au moins deux profilés longitudinaux (L1, L2) dans lesquels une direction longitudinale (X), une direction transversale (Y) et une direction en hauteur (Z) perpendiculaire à la direction longitudinale (X) et à la direction transversale (Y) sont définies de sorte que la section transversale (CS) des profilés longitudinaux (L1, L2) est dans le plan défini par les directions transversale (Y) et en hauteur (Z), la section transversale (CS) des profilés longitudinaux (L1, L2) étant constituée de :
- une section centrale (S1) ;
- une section inférieure (S2) ;
- une section supérieure (S3) ;
**caractérisée en ce que** la section supérieure (S3) comprend une rainure longitudinale (R3) dont l'ouverture (A3) est orientée selon la direction en hauteur (Z), la rainure longitudinale (R3) étant pourvue de bords de retenue (B3).

2. Structure (S) selon la revendication 1, un canal intérieur (C3) étant défini dans la rainure longitudinale (R3), la largeur de l'ouverture (A3) selon la direction transversale (Y) étant plus petite qu'une largeur du canal intérieur (C3) selon la direction transversale (Y), de sorte que les bords de retenue (B3) sont définis.

3. Structure (S) selon la revendication 2, dans laquelle, au-dessus de l'ouverture (A3), les bords de retenue (B3) sont inclinés, de sorte qu'ils permettent de guider l'insertion d'une plaque de retenue (PR).

4. Structure selon l'une quelconque des revendications 1 à 3, dans laquelle la section inférieure (S2) comprend une extension latérale inférieure (E2) selon la direction transversale (Y) qui définit une concavité (CH) orientée selon la direction en hauteur (Z), de sorte qu'elle constitue un canal (CH) de collecte des eaux.

5. Structure (S) selon l'une quelconque des revendications précédentes, dans laquelle la section centrale (S1) définit un premier côté (LD) et un second côté (LR) opposé au premier côté (LD) selon la direction transversale (Y) et la rainure (R3) est disposée dans une extension latérale supérieure (E3) disposée du même côté (LD, LR) que l'extension latérale inférieure (E2).

6. Structure selon l'une quelconque des revendications précédentes, dans laquelle dans l'un des profilés longitudinaux (L2) la section supérieure (S3) comprend deux rainures longitudinales (R3, R3') dont les ouvertures (A3, A3') sont orientés selon la direction en hauteur (Z), les rainures longitudinales (R3, R3') étant pourvues de bords de retenue, la section inférieure (S2) étant pourvue d'un canal de collecte des eaux (CH) des deux côtés (LD, LR), et de préférence la section centrale (S1) comprend un canal central (CH') disposé entre les rainures (R3, R3').

7. Structure selon l'une quelconque des revendications précédentes, dans laquelle la ou les extensions latérales inférieures (E2) comprennent à leur extrémité une rainure d'insertion (E2R) de plaques de fixation (PF).

8. Structure selon l'une quelconque des revendications précédentes, qui comprend des profilés transversaux intermédiaires (TRI) à section en U destinés à constituer des canaux de collecte de l'eau.

9. Pergola (P) pourvue d'une structure (S) selon l'une quelconque des revendications précédentes, qui comprend au moins un panneau (PN) pourvu d'un cadre (CP) et d'une plaque photovoltaïque (PV), la section du cadre (CP) étant pourvue d'une section centrale (CPC) qui constitue un encerclement du cadre (CP), une section supérieure de fixation de la plaque photovoltaïque (PV) et d'une section inférieure (CPI) qui prolonge perpendiculairement la section centrale (CPC) pour constituer un espace (V) entre la plaque photovoltaïque (PV) et le cadre (CP), et des vis de fixation (T) pourvues d'une tête d'entraînement (4), d'une tige (5) et d'une plaque de retenue (PR) destinée à être insérée dans les rainures (R3, R3').

10. Pergola (P) selon la revendication 9, dans laquelle les plaques de retenue (PR) ont une dimension plus petite ou égale à la largeur des rainures (R3, R3') et une dimension plus grande.

11. Pergola (P) selon la revendication 9 et la revendication 5, qui comprend au moins deux panneaux (PN, PN') disposés contigus selon la direction transversale (Y), l'un des panneaux (PN) étant fixé au profilé longitudinal (L2) par le biais d'une des rainures longitudinales (R3), l'autre panneau (PN') étant fixé au profilé longitudinal (L2) par le biais de l'autre rainure (R3'), de sorte que le canal central (CH') est disposé sous la zone où se trouvent les panneaux (PN, PN').

12. Pergola selon l'une quelconque des revendications 9 ou 11 et la revendication 8, qui comprend au moins deux panneaux (PN1, PN2) disposés contigus selon la direction longitudinale (X), au moins un profilé transversal intermédiaire (TRI) à section en U étant disposé de sorte que le canal qu'il définit est disposé sous la zone où se trouvent les panneaux (PN1, PN2).

13. Pergola selon l'une quelconque des revendications 10 à 12, qui comprend un profilé avant (3) et un profilé arrière (1) perpendiculaire aux profilés longitudinaux (L1, L2).

14. Pergola selon l'une quelconque des revendications 9 à 13, qui comprend au moins un caisson de jonctions (µ) des panneaux (PN, PN', PN1, PN2), et des profilés transversaux (PTR) de fixation et/ou logement du ou des caissons de jonctions (µ).

15. Procédé de montage d'une pergola selon l'une quelconque des revendications 9 à 14, qui comprend les étapes de :
- Monter la structure (S) ;
- Préparer les panneaux (PN, PN', PN1, PN2) avec leurs vis respectives (T) ;
- Disposer les panneaux (PN, PN', PN1, PN2) au-dessus des profilés longitudinaux (L1, L2) de sorte que les plaques de retenue (PR) sont alignées verticalement avec les rainures longitudinales (R3, R3') ;
- Abaisser les panneaux (PN, PN', PN1, PN2) de sorte que les plaques de retenue (PR) soient insérées dans les canaux en dessous des bords de retenue (B3) ;
- Faire tourner les plaques de retenue (PR) par le biais des têtes d'entraînement (4) des vis (T) de sorte que les extrémités des plaques de retenue (PR) soient en dessous des bords de retenue (B3) et que les panneaux soient fixés à la structure (S).
